# EUROPÄISCHE PATENTSCHRIFT

(11) **EP 3 497 003 B1**
(45) Veröffentlichungstag und Bekanntmachung des Hinweises auf die Patenterteilung: **13.10.2021**
(21) Anmeldenummer: 17742175.7
(22) Anmeldetag: 06.07.2017
(51) Int. Cl.: B62J 35/00, B60K 15/03, B62D 21/16, B62K 11/08

(54) **MOTORRADRAHMEN MIT INTEGRIERTEM KRAFTSTOFFTANK**
MOTORCYCLE FRAME WITH INTEGRATED FUEL TANK
CHASSIS POUR MOTOCYCLETTE AVEC RÉSERVOIR INTÉGRÉ

(30) Priorität: 09.08.2016 DE 102016214723
(43) Veröffentlichungstag der Anmeldung: 19.06.2019
(73) Patentinhaber: Bayerische Motoren Werke Aktiengesellschaft, 80809 München (DE)
(72) Erfinder: GORDNER, Achim, 85253 Grossberghofen (DE); PLOSS, Joerg, 85375 Neufahrn (DE)
(86) Internationale Anmeldenummer: PCT/EP2017/066879
(87) Internationale Veröffentlichungsnummer: WO 2018/028894

(56) Entgegenhaltungen:
- DE-A1- 10 230 943
- DE-A1- 19 500 711
- DE-A1-102014 207 135
- US-A- 4 951 774
- US-A1- 2012 085 314
- US-A1- 2014 239 122

## Beschreibung

Die Erfindung betrifft ein Neigefahrzeug, wie Motorrad oder motorradähnliches Kraftfahrzeug, mit mindestens einer Rahmenträgerstruktur zur befestigenden Aufnahme zumindest eines Antriebmittels, die mindestens einen Rahmenkörper umfasst, und mit mindestens einem Brennstofftank-System, das mindestens ein, insbesondere mit Druck beaufschlagbares, Speichermittel umfasst, in welches ein Brennstoff einfüllbar, darin speicherbar und dem Antriebsmittel zuführbar ist, wobei der Rahmenkörper der Rahmenträgerstruktur und das Speichermittel des Brennstofftank-Systems zumindest abschnittsweise ein gemeinsames Bauteil umfassen.

Ein derartiges Neigefahrzeug ist bekannt aus US 2014/0353061 A1, bei dem eine Brennstoffzelle in einem Fahrzeugkarosserierahmen angeordnet ist. Darüber hinaus ist bei dem bekannten Neigefahrzeug an dem Fahrzeugkarosserierahmen ein als Drucktank ausgebildetes Speichermittel zur Aufnahme von Wasserstoff angeordnet, in welchem Wasserstoff speicherbar und der Brennstoffzelle zur Energiegewinnung zuführbar ist.

Bei den bekannten Neigefahrzeugen sind die Speichermittel für Drücke über 100 Bar und mehr ausgelegt, was im Vergleich zu herkömmlichen, beispielsweise als Benzintank ausgebildeten, Speichermitteln zu höheren Materialstärken und erhöhtem Gewicht des Speichermittels führt.

Darüber hinaus führen die höheren Materialstärken der Speichermittel dazu, dass ein erhöhter Bauraum im Fahrzeugkarosserierahmen vorgehalten werden muss.

Ein gattungsgemäßes Neigefahrzeug ist bekannt aus US 2012/0085314 A1 bei dem das Speichermittel in den Rahmenkörper integriert ist.

Eine Aufgabe eines Ausführungsbeispiels der Erfindung ist, ein Neigefahrzeug vorzuschlagen, bei dem das System aus Fahrzeugkarosserierahmen, Speichermittel und Antriebsmittel kompakt baut.

Diese Aufgabe wird erfindungsgemäß durch ein eingangs genanntes Speichermittel gelöst, bei dem das gemeinsame Bauteil in Gänze oder zumindest bereichsweise einen kohlenstofffaserverstärkten Kunststoff und/oder ein Polyamid, insbesondere Kevlar, umfasst und bei dem das gemeinsame Bauteil mindestens ein als eine Kohlenstofffaserverbundkunstoff-Titan und/oder Kohlenstofffaserverbundkunstoff-Aluminium Hybridstruktur ausgebildetes Verstärkungsmittel umfasst.

Das Speichermittel kann einen mit Druck beaufschlagbaren oder beaufschlagten Drucktank umfassen.

Unter einem Neigefahrzeug werden Motorräder oder motorradähnliche Kraftfahrzeuge, wie Motorroller, insbesondere zwei-, drei- oder vierrädrige Motorroller, Scooter, neigbare Trikes, Quads oder dergleichen verstanden.

Der Rahmenköper und das Speichermittel können in Gänze oder nur abschnittsweise ein gemeinsames Bauteil umfassen. Hierbei ist es denkbar, dass der Rahmenkörper den Tank, insbesondere Drucktank, des Speichermittels in Gänze bildet oder Teile des Speichermittels innerhalb des Rahmenkörpers angeordnet und einzelne Elemente gemeinsam ausgebildet sind.

Dadurch, dass der Rahmenköper und das Speichermittel zumindest abschnittsweise ein gemeinsames Bauteil umfassen, ist das Neigefahrzeug kompakt, bauteilreduziert und gewichtsreduziert ausbildbar. Das gemeinsame Bauteil ist solchenfalls geeignet, hohem Druck standzuhalten, eine hohe Verwindungssteifigkeit und eine hohe Festigkeit aufzuweisen.

Das gemeinsame Bauteil kann grundsätzlich ein beliebiges Material umfassen, sofern es den zuvor genannten Anforderungen gerecht wird, nämlich hohem Druck standzuhalten und eine hohe Verwindungssteifigkeit sowie ein ausreichend hohe Festigkeit als tragender Körper der Rahmenträgerstruktur aufzuweisen. Dadurch, dass das gemeinsame Bauteil in Gänze oder zumindest bereichsweise einen kohlenstofffaserverstärkten Kunststoff, insbesondere Kevlar, umfasst lässt sich das gemeinsame Bauteil gewichtsreduziert ausgestalten.

Durch das Vorsehen eines als eine Kohlenstofffaserverbundkunstoff-Titan und/oder Kohlenstofffaserverbundkunstoff-Aluminium Hybridstruktur ausgebildetes Verstärkungsmittel kann das gemeinsame Bauteil weiter gewichtsreduziert und/oder zur Aufnahme höherer Drücke verbessert ausgebildet werden.

Es erweist sich als vorteilhaft, wenn das Neigefahrzeug mindestens eine an dem oder in dem gemeinsamen Bauteil angeordnete Einfülleinheit umfasst, durch die dem gemeinsamen Bauteil Brennstoff zuführbar ist.

Um die Sicherheit beim Befüllen des gemeinsamen Bauteils zu erhöhen, erweist es sich in Weiterbildung letztgenannter Ausführungsform als zweckmäßig, wenn die Einfülleinheit mindestens eine Einfüllöffnung und mindestens eine Ventileinheit umfasst, die insbesondere zwei in Reihe angeordnete Ventilkörper, insbesondere Rückschlagventile, aufweist. Durch das Vorsehen von zwei in Reihe geschalteten Rückschlagventilen ist Redundanz geschaffen.

Das gemeinsame Bauteil kann einen Druckspeicher, insbesondere einen Drucktank, umfassen.

Bei einer Ausführungsform des Neigefahrzeugs erweist es sich als vorteilhaft, wenn das gemeinsame Bauteil, insbesondere der Druckspeicher, einen Arbeitsdruck von bis zu 800 Bar, insbesondere bis zu 700 Bar, insbesondere bis zu 600 Bar, umfasst.

Das Neigefahrzeug kann grundsätzlich beliebig geformt sein. Es erweist sich jedoch als vorteilhaft, wenn die Rahmenträgerstruktur einen Kastenrahmen und/oder einen Zentralrohrrahmen umfasst.

Zentralrohrrahmen sind dadurch gekennzeichnet, dass jeweils ein einzelnes Rahmenrohr in der Längsachse des Motorrades für die Steifigkeit und nötige Fahragilität sorgt. Für eine Festigkeitserhöhung kann das einzelne obere Rahmenrohr stärker dimensioniert werden. Der Zentralrohrrahmen kann ebenfalls zylindrisch geformt sein oder einen mehreckigen Querschnitt umfasst.

Schließlich ist bei einer Ausführungsform des Neigefahrzeugs vorgesehen, dass das Antriebsmittel eine Brennstoffzelle, einen Elektromotor und/oder einen Verbrennungsmotor umfasst und/oder dass der Brennstoff einen Flüssigtreibstoff, wie Ethanol, Diesel, Flüssigerdgas etc., oder einen Gastreibstoff, wie Erdgas, Ethan, Wasserstoff, Methan, etc., umfasst.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform des Neigefahrzeugs.

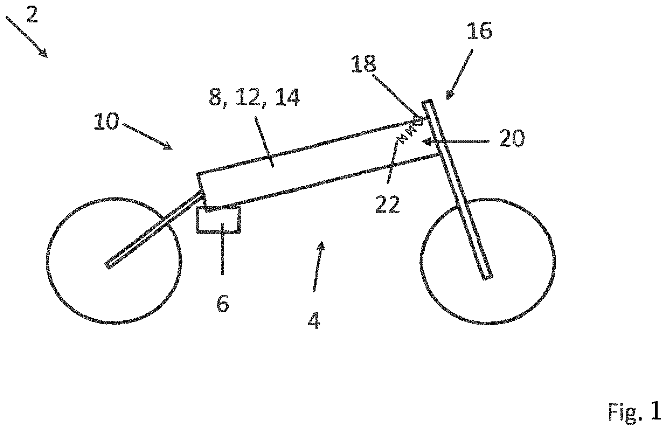

In der Zeichnung zeigt:
- Figur: eine schematische Seitenansicht auf ein Ausführungsbeispiel des Neigefahrzeugs.

Die Figur zeigt ein insgesamt mit dem Bezugszeichen 2 versehenes Neigefahrzeug, wie Motorrad oder motorradähnliches Kraftfahrzeug. Das Neigefahrzeug 2 umfasst eine Rahmenträgerstruktur 4 zur befestigenden Aufnahme zumindest eines Antriebmittels 6. Die Rahmenträgerstruktur 4 umfasst bei dem in der Figur ersichtlichen Ausführungsbeispiel einen Rahmenkörper 8 an dem das Antriebsmittel 6 festgelegt ist.

Um das Antriebsmittel 6 mit Brennstoff versorgen zu können, umfasst das Neigefahrzeug 2 ein Brennstofftank-System 10, das ein Speichermittel 12 aufweist. In das Speichermittel 12 ist Brennstoff einfüllbar, darin speicherbar und dem Antriebsmittels 6 zuführbar.

Der Rahmenkörper 8 der Rahmenträgerstruktur 4 und das Speichermittel 12 des Brennstofftank-Systems 10 umfassen bei dem gezeigten Ausführungsbeispiel ein gemeinsames Bauteil 14. Das gemeinsame Bauteil 14 ist als Druckspeicher, insbesondere als Drucktank, ausgebildet und zugleich tragender Rahmenkörper 8 der Rahmenträgerstruktur 4.

Darüber hinaus umfasst das in der Figur ersichtliche Neigefahrzeug 2 eine an dem oder in dem gemeinsamen Bauteil 14 angeordnete Einfülleinheit 16, durch die dem gemeinsamen Bauteil 14 von außen Brennstoff zuführbar ist. Hierzu weist die Einfülleinheit 16 eine Einfüllöffnung 18 und eine Ventileinheit 20 auf.

Zur Erhöhung der Sicherheit beim Betanken umfasst die Ventileinheit 20 zwei Ventilkörper 22, die in Reihe, also aufeinander folgend, angeordnet sind.

Bei dem in der Figur ersichtlichen Neigefahrzeug 2 ist die Rahmenträgerstruktur 4 als Zentralrohrrahmen ausgebildet.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen wesentlich sein.

### Bezugszeichenliste

- 2: Neigefahrzeug
- 4: Rahmenträgerstruktur
- 6: Antriebsmittel
- 8: Rahmenkörper
- 10: Brennstofftank-System
- 12: Speichermittel
- 14: Gemeinsames Bauteil
- 16: Einfülleinheit
- 18: Einfüllöffnung
- 20: Ventileinheit
- 22: Ventilkörper

## Patentansprüche

1. Neigefahrzeug (2), wie Motorrad oder motorradähnliches Kraftfahrzeug, mit mindestens einer Rahmenträgerstruktur (4) zur befestigenden Aufnahme zumindest eines Antriebsmittels (6), die mindestens einen Rahmenkörper (8) umfasst, und mit mindestens einem Brennstofftank-System (10), das mindestens ein mit Druck beaufschlagbares Speichermittel (12) umfasst, in welches ein Brennstoff einfüllbar, darin speicherbar und dem Antriebsmittel (6) zuführbar ist, wobei der Rahmenkörper (8) der Rahmenträgerstruktur (4) und das Speichermittel (12) des Brennstofftank-Systems (10) zumindest abschnittsweise ein gemeinsames Bauteil (14) umfassen, wobei das gemeinsame Bauteil (14) in Gänze oder zumindest bereichsweise einen kohlenstofffaserverstärkten Kunststoff umfasst, **dadurch gekennzeichnet, dass** das gemeinsame Bauteil (14) mindestens ein als Kohlenstofffaserverbundkunstoff-Titan und/oder Kohlenstofffaserverbundkunstoff-Aluminium Hybridstruktur ausgebildetes Verstärkungsmittel umfasst.

2. Neigefahrzeug (2) nach Anspruch 1, **gekennzeichnet durch** mindestens eine an dem oder in dem gemeinsamen Bauteil (14) angeordnete Einfülleinheit (16), durch die dem gemeinsamen Bauteil (14) Brennstoff zuführbar ist.

3. Neigefahrzeug (2) nach Anspruch 2, **dadurch gekennzeichnet, dass** die Einfülleinheit (16) mindestens eine Einfüllöffnung (18) und mindestens eine Ventileinheit (20) umfasst, die insbesondere zwei in Reihe angeordnete Ventilkörper (22), insbesondere Rückschlagventile, aufweist.

4. Neigefahrzeug (2) nach mindestens einem der vorhergehenden Ansprüche, **dadurch gekennzeichnet, dass** das gemeinsame Bauteil (14) einen Druckspeicher, insbesondere einen Drucktank, umfasst.

5. Neigefahrzeug (2) nach mindestens einem der vorhergehenden Ansprüche, **dadurch gekennzeichnet, dass** das gemeinsame Bauteil (14), insbesondere der Druckspeicher, einen Arbeitsdruck von bis zu 800 Bar, insbesondere bis zu 700 Bar, insbesondere bis zu 600 Bar, umfasst.

6. Neigefahrzeug (2) nach mindestens einem der vorhergehenden Ansprüche, **dadurch gekennzeichnet, dass** die Rahmenträgerstruktur (4) einen Kastenrahmen und/oder einen Zentralrohrrahmen umfasst.

7. Neigefahrzeug (2) nach mindestens einem der vorhergehenden Ansprüche, **dadurch gekennzeichnet, dass** das Antriebsmittel (6) eine Brennstoffzelle, einen Elektromotor und/oder einen Verbrennungsmotor umfasst und/oder dass der Brennstoff einen Flüssigtreibstoff, wie Ethanol, Diesel, Flüssigerdgas etc., oder einen Gastreibstoff, wie Erdgas, Ethan, Wasserstoff, Methan, etc., umfasst.

## Claims

1. Tilting vehicle (2), such as motorcycle or motorcycle-like motor vehicle, with at least one frame carrier structure (4) for receiving, in a fastening manner, at least one drive means (6), which frame carrier structure (4) comprises at least one frame body (8), and with at least one fuel tank system (10) which comprises at least one pressurizable storage means (12), into which a fuel can be filled, can be stored therein and can be fed to the drive means (6), the frame body (8) of the frame carrier structure (4) and the storage means (12) of the fuel tank system (10) comprising a common component (14) at least in sections, the common component (14) comprising, in its entirety or at least in regions, a carbon fibre-reinforced plastic, **characterized in that** the common component (14) comprises at least one reinforcing means which is configured as a carbon fibre composite plastic/titanium and/or carbon fibre composite plastic/aluminium hybrid structure.

2. Tilting vehicle (2) according to Claim 1, **characterized by** at least one filling unit (16) which is arranged on or in the common component (14) and by way of which fuel can be fed to the common component (14).

3. Tilting vehicle (2) according to Claim 2, **characterized in that** the filling unit (16) comprises at least one filling opening (18) and at least one valve unit (20) which has, in particular, two valve bodies (22) which are arranged in series, in particular check valves.

4. Tilting vehicle (2) according to at least one of the preceding claims, **characterized in that** the common component (14) comprises a pressure accumulator, in particular a pressure tank.

5. Tilting vehicle (2) according to at least one of the preceding claims, **characterized in that** the common component (14), in particular the pressure accumulator, comprises a working pressure of up to 800 bar, in particular up to 700 bar, in particular up to 600 bar.

6. Tilting vehicle (2) according to at least one of the preceding claims, **characterized in that** the frame carrier structure (4) comprises a box frame and/or a backbone chassis.

7. Tilting vehicle (2) according to at least one of the preceding claims, **characterized in that** the drive means (6) comprises a fuel cell, an electric motor and/or an internal combustion engine, and/or **in that** the fuel comprises a liquid fuel, such as ethanol, diesel, liquefied natural gas, etc., or a gaseous fuel, such as natural gas, ethane, hydrogen, methane, etc.

## Revendications

1. Véhicule inclinable (2), tel qu'une motocyclette ou un véhicule à moteur de type motocyclette, comprenant au moins une structure de support de châssis (4) destinée à recevoir de manière fixe au moins un moyen d'entraînement (6) et comprenant au moins un corps de châssis (8), et comprenant au moins un système de réservoir de combustible (10) qui comprend au moins un moyen de stockage (12) pouvant être mis sous pression et dans lequel un combustible peut être versé, stocké dans celui-ci et acheminé au moyen d'entraînement (6), le corps de châssis (8) de la structure de support de châssis (4) et le moyen de stockage (12) du système de réservoir de combustible (10) comprenant au moins par endroits un composant commun (14), le composant commun (14) comprenant entièrement ou du moins par endroits une matière plastique renforcée par des fibres de carbone,
**caractérisé en ce que** le composant commun (14) comprend au moins un moyen de renforcement réalisé sous la forme d'une structure hybride en matériau renforcé par des fibres de carbone et titane et/ou en matériau renforcé par des fibres de carbone et aluminium.

2. Véhicule inclinable (2) selon la revendication 1, **caractérisé par** au moins une unité de remplissage (16) disposée sur ou dans le composant commun (14) et à travers laquelle un combustible peut être acheminé au composant commun (14).

3. Véhicule inclinable (2) selon la revendication 2, **caractérisé en ce que** l'unité de remplissage (16) présente au moins une ouverture de remplissage (18) et au moins une unité de vanne (20) qui présente en particulier deux corps de vanne (22) connectés en série, en particulier des clapets antiretour.

4. Véhicule inclinable (2) selon au moins l'une des revendications précédentes, **caractérisé en ce que** le composant commun (14) comprend un accumulateur de pression, en particulier un réservoir sous pression.

5. Véhicule inclinable (2) selon au moins l'une des revendications précédentes, **caractérisé en ce que** le composant commun (14), en particulier l'accumulateur de pression, comprend une pression de service jusqu'à 800 bar, en particulier jusqu'à 700 bar, en particulier jusqu'à 600 bar.

6. Véhicule inclinable (2) selon au moins l'une des revendications précédentes, **caractérisé en ce que** la structure de support de châssis (4) comprend un châssis en caisson et/ou un châssis en tube central.

7. Véhicule inclinable (2) selon au moins l'une des revendications précédentes, **caractérisé en ce que** le moyen d'entraînement (6) comprend une pile à combustible, un moteur électrique et/ou un moteur à combustion interne, et/ou **en ce que** le combustible comprend un combustible liquide, tel que l'éthanol, le diesel, le gaz naturel liquéfié etc., ou un combustible gazeux, tel que le gaz naturel, l'éthane, l'hydrogène, le méthane etc.
